# EUROPEAN PATENT APPLICATION

(11) **EP 2 782 238 A2**
(43) Date of publication of application: **24.09.2014**
(21) Application number: 13182704.0
(22) Date of filing: 02.09.2013
(51) Int. Cl.: H02M 3/158, H05B 37/02

(54) **Power supply circuit with overcurrent protection for an illuminating device**

(30) Priority: 22.03.2013 JP 2013061131
(71) Applicant: Toshiba Lighting & Technology Corporation, Yokosuka-shi Kanagawa 237-8510 (JP)
(72) Inventor: Akahoshi, Hiroshi, Kanagawa, 237-8510 (JP); Kitamura, Noriyuki, Kanagawa, 237-8510 (JP); Otake, Hirokazu, Kanagawa, 237-8510 (JP); Takahashi, Yuji, Kanagawa, 237-8510 (JP)
(74) Representative: Bokinge, Ole

(57) **Abstract**

According to one embodiment, a power supply circuit (14) includes a DC-DC converter (21) and an overcurrent protection unit (25). The DC-DC converter (21) converts a first DC voltage into a second DC voltage and supplies the voltage to a DC load (12). The overcurrent protection unit (25) performs feedback control of the DC-DC converter (21) based on current which flows through the DC load. The DC-DC converter (21) includes a normally-on type switching element (41). The switching element (41) includes a first electrode, a second electrode, and a third electrode for controlling current which flows between the first electrode and the second electrode, and includes a first state, and a second state where the current which flows between the first electrode and the second electrode is smaller than that of the first state. The overcurrent protection unit (25) sets the switching element (41) in the second sate, when the current which flows through the DC load (12) is larger than a reference value.

## Description

### FIELD

Embodiments described herein relate generally to a power supply circuit and an illuminating device.

### BACKGROUND

In an illuminating device, an illuminating light source is in a process of being switched from an incandescent bulb or a fluorescent bulb to a light source which realizes energy saving and longer operating life, for example, a light emitting element such as a light-emitting diode (LED). In a power supply circuit which supplies power to such a light source, a normally-on type element is used as a switching element which converts power by switching. In the power supply circuit including the normally-on type switching element, it is desirable to perform more accurate current control and overcurrent protection.

### BRIEF DESCRIPTION OF THE DRAWINGS

FIG. 1 is a block diagram schematically showing an illuminating device according to an exemplary embodiment;
FIG. 2 is a circuit diagram schematically showing a power supply circuit according to the exemplary embodiment; and
FIG. 3 is a circuit diagram schematically showing the other power supply circuit according to the exemplary embodiment.

### DETAILED DESCRIPTION

In general, according to one embodiment, there is provided a power supply circuit including: a DC-DC converter which converts a first DC voltage supplied from a power supply flow path into a second DC voltage having a different absolute value, to supply the voltage to a DC load; and an overcurrent protection unit which is electrically connected to an end portion of the DC load on a low potential side, and performs feedback control of the DC-DC converter based on current which flows to the DC load. The DC-DC converter includes a normally-on type switching element. The switching element includes a first electrode which is electrically connected to the power supply flow path, a second electrode which is electrically connected to the DC load, and a third electrode for controlling current which flows between the first electrode and the second electrode. The switching element changes a state from a first state into a second state by setting a potential of the third electrode lower than a potential of the second electrode, the first state being a state where a current flows between the first electrode and the second electrode, and the second state being a state where a current which flows between the first electrode and the second electrode is smaller than that of the first state. The overcurrent protection unit is electrically connected to the third electrode, and when the current which flows to the DC load is greater than a reference value, the overcurrent protection unit changes the state of the switching element from the first state to the second state by decreasing the potential of the third electrode.

According to another exemplary embodiment, there is provided an illuminating device including: an illuminating load; and a power supply circuit which supplies power to the illuminating load, and includes a DC-DC converter which converts a first DC voltage supplied from a power supply flow path into a second DC voltage having a different absolute value, to supply the voltage to a DC load and an overcurrent protection unit which is electrically connected to an end portion of the DC load on a low potential side, and performs feedback control of the DC-DC converter based on current which flows to the DC load. The DC-DC converter includes a normally-on type switching element. The switching element includes a first electrode which is electrically connected to the power supply flow path, a second electrode which is electrically connected to the DC load, and a third electrode for controlling current which flows between the first electrode and the second electrode. The switching element changes a state from a first state into a second state by setting a potential of the third electrode lower than a potential of the second electrode, the first state being a state where a current flows between the first electrode and the second electrode, and the second state being a state where a current which flows between the first electrode and the second electrode is smaller than that of the first state. The overcurrent protection unit is electrically connected to the third electrode, and when the current which flows to the DC load is greater than a reference value, the overcurrent protection unit changes the state of the switching element from the first state to the second state by decreasing the potential of the third electrode.

Hereinafter, each exemplary embodiment will be described with reference to the drawings.

The drawings are schematically or conceptually shown, and a relationship between a thickness and a width of each component, a ratio of sizes between components, and the like are not limited to be the same as actual components. In addition, even in a case of showing the same components, dimensions or ratios may be differently shown by depending on the drawings.

In the exemplary embodiment and each drawing, the same reference numerals are given to elements which are same as elements described in the previous drawing, and detailed description will be appropriately omitted.

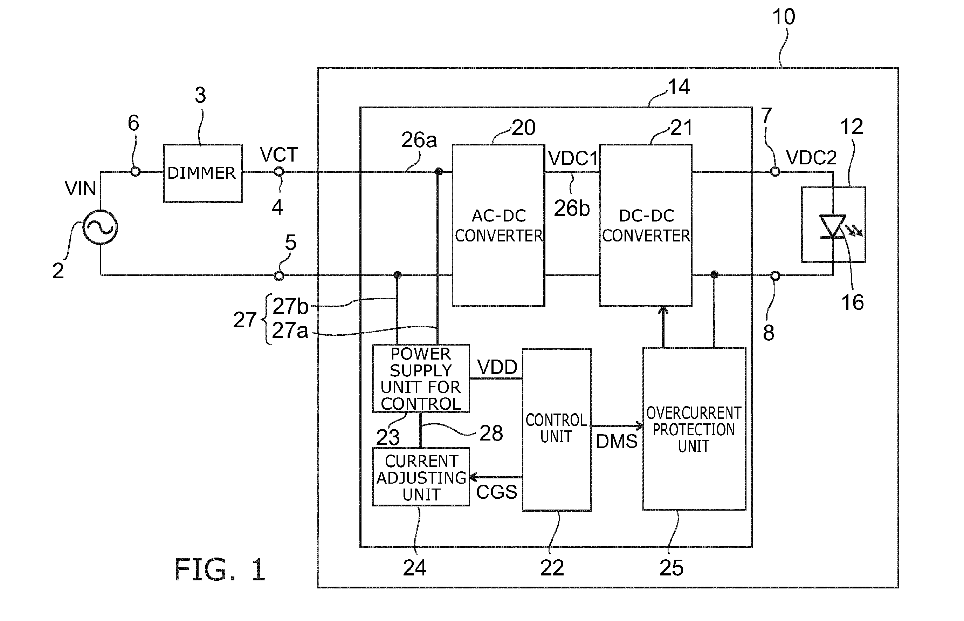

FIG. 1 is a block diagram schematically showing the illuminating device according to an exemplary embodiment.

As shown in FIG. 1, an illuminating device 10 includes an illuminating load 12 (DC load) and a power supply circuit 14. The illuminating load 12 includes an illuminating light source 16 such as a light-emitting diode (LED), for example. The illuminating light source 16 may be an organic light-emitting diode (OLED) and the like, for example. A light emitting element including a forward drop voltage is used for the illuminating light source 16, for example. The illuminating load 12 lights up the illuminating light source 16 by application of output voltage and supply of output current from the power supply circuit 14. Values of the output voltage and the output current are defined according to the illuminating light source 16.

The power supply circuit 14 is connected to AC power supply 2 and a dimmer 3. In the exemplary embodiment, the "connection" means electrical connection and includes a case of not being physically connected or a case of being connected through the other elements.

The AC power supply 2 is a commercial power supply, for example. The dimmer 3 generates AC voltage VCT obtained by conduction angle control from power supply voltage VIN of alternate current of the AC power supply 2. The power supply circuit 14 lights up the illuminating light source 16 by converting the AC voltage VCT supplied from the dimmer 3 into DC voltage and outputs the voltage to the illuminating load 12. The power supply circuit 14 performs synchronization with the AC voltage VCT subject to the conduction angle control, and performs light modulating of the illuminating light source 16. The dimmer 3 is provided when necessary and can be omitted. When the dimmer 3 is not provided, the power supply voltage VIN of the AC power supply 2 is supplied to the power supply circuit 14.

In the conduction angle control of the dimmer 3, there are phase control (leading edge) type which controls a phase conducting in a period where an absolute value of AC voltage becomes a maximum value from zero-cross of the AC voltage, and opposite phase control (trailing edge) type which controls a phase blocking in a period where an absolute value of the AC voltage becomes the maximum value and then the AC voltage performs zero-cross.

The dimmer 3 which performs phase control has a simple circuit configuration and can deal with a relatively large electric power load. However, when using a triac, a light load operation is difficult, and an unstable operation is often performed when a so-called power supply dip in which power supply voltage temporarily decreases occurs. In addition, when connecting capacitive load, compatibility with the capacitive load is not good, due to generation of inrush current.

On the other hand, the dimmer 3 which performs opposite phase control can be operated with the light load. Even when the capacitive load is connected thereto, inrush current is not generated and even when the power supply dip occurs, the operation is stable. However, the circuit configuration is complicated and the temperature easily increases, and thus the operation with heavy load is difficult. In addition, when connecting inductive load, a surge may occur.

In the exemplary embodiment, the dimmer 3 has a configuration of series insertion between terminals 4 and 6 which are on one side of a pair of power supply lines which supplies the power supply voltage VIN, however the other configuration may also be used.

The power supply circuit 14 includes an AC-DC converter 20, a DC-DC converter 21, a control unit 22, a power supply unit for control 23, a current adjusting unit 24, and an overcurrent protection unit 25. The AC-DC converter 20 converts AC voltage VCT supplied through a first power supply flow path 26a into a first DC voltage VDC1.

The DC-DC converter 21 is connected to the AC-DC converter 20 through a second power supply flow path 26b. The DC-DC converter 21 converts the first DC voltage VDC1 supplied from the second power supply flow path 26b into a second DC voltage VDC2 having a predetermined voltage value according to the illuminating load 12 and supplies the voltage to the illuminating load 12. An absolute value of the second DC voltage VDC2 is different from an absolute vale of the first DC voltage VDC1. The absolute value of the second DC voltage VDC2 is lower than the absolute value of the first DC voltage VDC1, for example. In this example, the DC-DC converter 21 is a step down converter. The illuminating light source 16 of the illuminating load 12 is lighted up by supply of the second DC voltage VDC2.

The power supply unit for control 23 includes a wiring unit 27 which is connected to the first power supply flow path 26a. The wiring unit 27 includes a wire 27a connected to an input terminal 4 and a wire 27b connected to an input terminal 5. The power supply unit for control 23 converts AC voltage VCT input through the wiring unit 27 into DC driving voltage VDD according to the control unit 22 and supplies the driving voltage VDD to the control unit 22. The wiring unit 27 may be connected to the second power supply flow path 26b, for example.

The current adjusting unit 24 includes a branch flow path 28 electrically connected to the first power supply flow path 26a, and can switch a conduction state (first flow path state) where a part of current which flows through the first power supply flow path 26a flows to the branch flow path 28, and a non-conduction state (second flow path state) where a part of the current does not flow. Accordingly, the current adjusting unit 24 adjusts current which flows to the first power supply flow path 26a, for example. In this example, the branch flow path 28 of the current adjusting unit 24 is connected to the first power supply flow path 26a through the power supply unit for control 23. The branch flow path 28 may be directly connected to the first power supply flow path 26a without passing through the power supply unit for control 23. The non-conduction state also includes a case where a minute current, which does not affect the operation, flows to the branch flow path 28. The non-conduction state is a state where the current which flows to the branch flow path 28 is smaller than that of the conduction state, for example. The branch flow path 28 may be connected to the second power supply flow path 26b, for example.

The control unit 22 detects a conduction angle of AC voltage VCT. The control unit 22 generates a dimming signal DMS corresponding to the detected conduction angle and inputs the dimming signal DMS to the overcurrent protection unit 25. In addition, the control unit 22 generates a control signal CGS according to the detected conduction angle and controls switching of the current adjusting unit 24 between the conduction state and the non-conduction state by inputting the control signal CGS to the current adjusting unit 24. As described above, by controlling the current adjusting unit 24 and the overcurrent protection unit 25 according to the detected conduction angle, the control unit 22 performs synchronization with conduction angle control of the dimmer 3 and modulates light of the illuminating light source 16. A micro processor is used for the control unit 22, for example.

The overcurrent protection unit 25 is connected to an output terminal 8 of the power supply circuit 14 on a low potential side. That is, the overcurrent protection unit 25 is connected to an end portion of the illuminating load 12 on a low potential side. The overcurrent protection unit 25 detects current which flows to the illuminating load 12 (illuminating light source 16). The overcurrent protection unit 25 performs feedback control of the DC-DC converter 21 based on the dimming signal DMS input from the control unit 22 and the detected current. For example, when the overcurrent flows to the illuminating light source 16, feedback control of the DC-DC converter 21 is performed so as to make the current small. Accordingly, the overcurrent protection unit 25 suppresses the flow of the overcurrent to the illuminating light source 16.

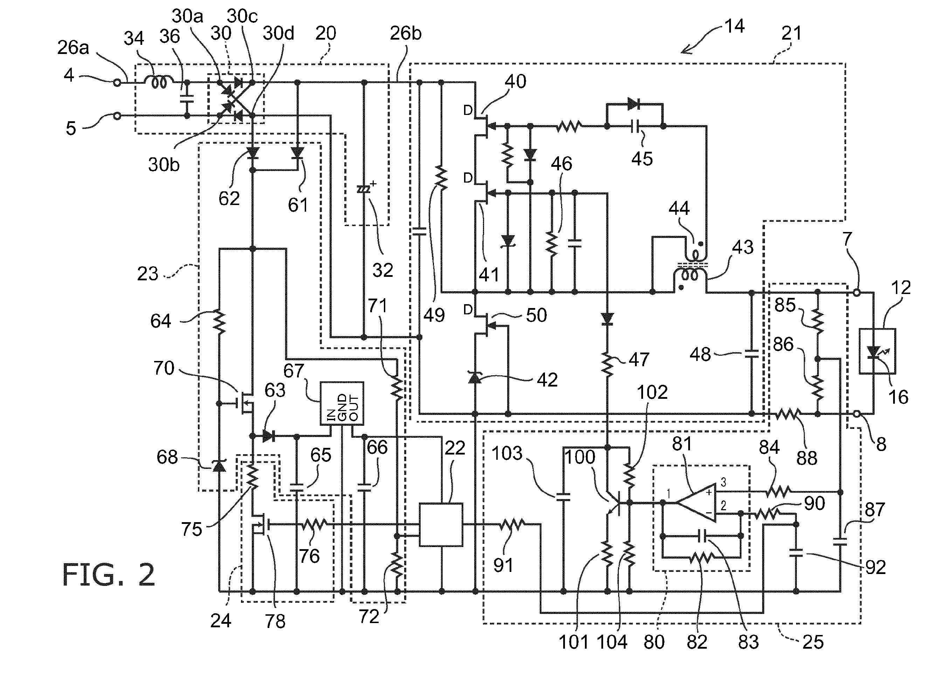

FIG. 2 is a circuit diagram schematically showing the power supply circuit according to the exemplary embodiment.

As shown in FIG. 2, the AC-DC converter 20 includes a rectification circuit 30, a smoothing capacitor 32, an inductor 34, and a filter capacitor 36.

The rectification circuit 30 is a diode bridge, for example. Input terminals 30a and 30b of the rectification circuit 30 are connected to the pair of input terminals 4 and 5. The AC voltage VCT obtained by phase control or opposite phase control through the dimmer 3 is input to the input terminals 30a and 30b of the rectification circuit 30. The rectification circuit 30 performs full-wave rectification of the AC voltage VCT, and generates undulating voltage after the full-wave rectification between a high potential terminal 30c and a low potential terminal 30d.

The smoothing capacitor 32 is connected between the high potential terminal 30c and the low potential terminal 30d of the rectification circuit 30. The smoothing capacitor 32 smoothes the undulating voltage rectified by the rectification circuit 30. Accordingly, the first DC voltage VDC1 is generated on both ends of the smoothing capacitor 32.

The inductor 34 is connected to the input terminal 4 in series. The inductor 34 is connected to the first power supply flow path 26a in series, for example. The filter capacitor 36 is connected between the input terminals 4 and 5. The filter capacitor 36 is connected to the first power supply flow path 26a in parallel with each other, for example. The inductor 34 and the filter capacitor 36 remove noise contained in the AC voltage VCT, for example.

The DC-DC converter 21 is connected to both ends of the smoothing capacitor 32. Accordingly, the first DC voltage VDC1 is input to the DC-DC converter 21. The DC-DC converter 21 converts the first DC voltage VDC1 into the second DC voltage VDC2 having a different absolute value, and outputs the second DC voltage VDC2 to output terminals 7 and 8 of the power supply circuit 14. The illuminating load 12 is connected to the output terminals 7 and 8. The illuminating load 12 lights up the illuminating light source 16 by the second DC voltage VDC2 supplied from the power supply circuit 14.

The DC-DC converter 21 includes an output element 40, a constant current element 41 (switching element), a rectification element 42, an inductor 43, a feedback winding (driving element) 44 which drives the output element 40, a coupling capacitor 45, partial pressure resistors 46 and 47, an output capacitor 48, and a bias resistor 49.

The output element 40 and the constant current element 41 are for example field effect transistors (FET), are for example high electron mobility transistors (HEMT), and are normally-on type elements.

A drain of the constant current element 41 is electrically connected to the second power supply flow path 26b through the output element 40. A source of the constant current element 41 is electrically connected to the illuminating load 12. A gate of the constant current element 41 is an electrode for controlling current which flows between the drain and the source of the constant current element 41. That is, in this example, the drain of the constant current element 41 is a first electrode, and the source of the constant current element 41 is a second electrode, and the gate of the constant current element 41 is a third electrode.

The constant current element 41 includes a first state where the current flows between the drain and the source, and a second state where the current which flows between the drain and the source is smaller than that of the first state. The first state is for example, an on state, and the second state is for example an off state. The first state is not limited to the on state. The second state is not limited to the off state. The first state may be an arbitrary state where the flowing current is relatively larger than that of the second state. The second state may be an arbitrary state where the flowing current is relatively smaller than that of the first state.

In the constant current element 41 which is the normally-on type element, by further decreasing potential of the gate lower than potential of the source, the state is changed from the first state to the second state. For example, the constant current element 41 changes the state from on state to the off state by setting the potential of the gate to negative potential relatively with respect to the potential of the source.

A drain of the output element 40 is connected to the high potential terminal 30c of the rectification circuit 30. A source of the output element 40 is connected to the drain of the constant current element 41. A gate of the output element 40 is connected to one end of the feedback winding 44 through the coupling capacitor 45.

The source of the constant current element 41 is connected to one end of the inductor 43 and the other end of the feedback winding 44. Voltage obtained by dividing the source potential of the constant current element 41 by partial pressure resistors 46 and 47 is input to the gate of the constant current element 41. Protection diodes are connected to the gate of the output element 40 and the gate of the constant current element 41, respectively.

The bias resistor 49 is connected between the drain of the output element 40 and the source of the constant current element 41, and supplies DC voltage to the partial pressure resistors 46 and 47. As a result, potential lower than that of the source is supplied to the gate of the constant current element 41.

When current which increases from one end to the other end of the inductor 43 flows, the inductor 43 and the feedback winding 44 are subject to magnetic coupling by polarity in which positive voltage is supplied to the gate of the output element 40.

The rectification element 42 is connected between the source of the constant current element 41 and the low potential terminal 30d of the rectification circuit 30, by setting a direction of the constant current element 41 from the low potential terminal 30d as a forward direction.

In this example, a semiconductor element 50 is provided between the rectification element 42 and the source of the constant current element 41. The FET or GaN-HEMT is used for the semiconductor element 50, for example. The semiconductor element 50 is of a normally-on type, for example. The gate of the semiconductor element 50 is connected to the low potential terminal 30d of the rectification circuit 30. Accordingly, the semiconductor element 50 is held in the on state.

The other end of the inductor 43 is connected to the output terminal 7. The low potential terminal 30d of the rectification circuit 30 is connected to the output terminal 8. The output capacitor 48 is connected between the output terminal 7 and the output terminal 8. The illuminating load 12 is connected between the output terminal 7 and the output terminal 8 in parallel with the output capacitor 48.

The power supply unit for control 23 includes rectification elements 61 to 63, a resistor 64, capacitors 65 and 66, a regulator 67, a zener diode 68, and a semiconductor element 70.

The rectification elements 61 and 62 are diodes, for example. An anode of the rectification element 61 is connected to the high potential terminal 30c of the rectification circuit 30 through the wire 27a. An anode of the rectification element 42 is connected to the low potential terminal 30d of the rectification circuit 30 through the wire 27b.

The FET or GaN-HEMT is used for the semiconductor element 70, for example. Hereinafter, the semiconductor element 70 will be described as the FET. In this example, the semiconductor element 70 is an enhancement type n-channel FET. The semiconductor element 70 includes a source, a drain, and a gate. Potential of the drain is set to be higher than potential of the source. The gate is used for switching the first state where current flows between the source and the drain and the second state where current which flows between the source and the drain is smaller than the first state. In the second state, the current substantially does not flow between the source and the drain. The semiconductor element 70 may be a p-channel or may be of a depression-type. For example, when the semiconductor element 70 is set to a p-channel type, the potential of the source is set to be higher than the potential of the drain.

A drain of the semiconductor element 70 is connected to a cathode of the rectification element 61 and a cathode of the rectification element 62. That is, the drain of the semiconductor element 70 is connected to the first power supply flow path 26a through the rectification elements 61 and 62. A source of the semiconductor element 70 is connected to an anode of the rectification element 63. A gate of the semiconductor element 70 is connected to a cathode of the zener diode 68. In addition, the gate of the semiconductor element 70 is connected to the high potential terminal 30c of the rectification circuit 30 through the resistor 64.

The cathode of the rectification element 63 is connected to one end of the capacitor 65 and an input terminal of the regulator 67. An output terminal of the regulator 67 is connected to the control unit 22 and one end of the capacitor 66.

Each polar current generated with the applying of the AC voltage VCT flows to the drain of the semiconductor element 70 through the rectification element 61. Accordingly, the undulating voltage obtained by the full-wave rectification of the AC voltage VCT is applied to the drain of the semiconductor element 70.

The undulating voltage is applied to the cathode of the zener diode 68 through the resistor 64 and the rectification element 61. Accordingly, substantially constant voltage according to breakdown voltage of the zener diode 68 is applied to the gate of the semiconductor element 70. In addition, substantially constant current flows between the drain and the source of the semiconductor element 70. As described above, the semiconductor element 70 functions as a constant current element. The semiconductor element 70 adjusts current which flows to the wiring unit 27.

The capacitor 65 smoothes the undulating voltage supplied from the source of the semiconductor element 70 through the rectification element 63 and converts the undulating voltage to the DC voltage. The regulator 67 generates substantially constant DC driving voltage VDD from the input DC voltage, and outputs the voltage to the control unit 22. The capacitor 66 is used to remove the noise of the driving voltage VDD, for example. Accordingly, the driving voltage VDD is supplied to the control unit 22.

In addition, resistors 71 and 72 are further provided in the power supply unit for control 23. One end of the resistor 71 is connected to cathodes of the rectification elements 61 and 62. The other end of the resistor 71 is connected to one end of the resistor 72. The other end of the resistor 72 is connected to the low potential terminal 30d of the rectification circuit 30. Connection point of the resistors 71 and 72 is connected to the control unit 22. Accordingly, voltage according to a partial pressure ratio of the resistors 71 and 72 is input to the control unit 22 as detection voltage for detecting the absolute value of the AC voltage VCT.

The control unit 22 detects presence or absence of the conduction angle control of the AC voltage VCT or types (phase control or opposite phase control) of the conduction angle control based on the detection voltage, for example. The control unit 22 performs detection of the conduction angle when the conduction angle control is performed. Based on the detection result, the control unit 22 generates the dimming signal DMS and inputs the dimming signal DMS to the overcurrent protection unit 25. For example, the control unit 22 inputs a PWM signal corresponding to the detected conduction angle to the overcurrent protection unit 25 as the dimming signal DMS.

The current adjusting unit 24 includes resistors 75 and 76 and a switching element 78. The FET or GaN-HEMT is used for the switching element 78, for example. Hereinafter, the switching element 78 will be described as the FET.

One end of the resistor 75 is connected to the source of the semiconductor element 70. The other end of the resistor 75 is connected to the drain of the switching element 78. The gate of the switching element 78 is connected to the control unit 22 through the resistor 76. The control unit 22 inputs a control signal CGS to the gate of the switching element 78. For example, the normally-off type is used to the switching element 78. For example, by switching the control signal CGS input from the control unit 22 from Lo to Hi, the switching element 78 is changed from the off state to the on state.

When setting the switching element 78 to the on state, for example, a part of current which flows through the first power supply flow path 26a, flows to the branch flow path 28 through the rectification elements 61 and 62 and the semiconductor element 70. That is, by setting the switching element 78 to the on state, the current adjusting unit 24 is switched to the conduction state and the switching element 78 is switched to the off state, and accordingly, the current adjusting unit 24 is switched to the non-conduction state.

The control unit 22 generates the control signal CGS, for example, according to presence or absence of the conduction angle control of the AC voltage VCT and the detected result of the types thereof. For example, when conduction angle control of a phase control system is performed, in the AC voltage VCT being equal to or lower than the predetermined value, holding current necessary for turning the triac on flows to the current adjusting unit 24 (branch flow path 28). Accordingly, the operation of the dimmer 3 can be stabilized, for example. On the other hand, when the conduction angle control of an opposite phase control system is performed, at the timing for switching from the conduction state to the shielding state, electrical charge accumulated in the filter capacitor 36 or the like is drawn to the current adjusting unit 24. Accordingly, the detection accuracy of the conduction angle can be further improved, for example.

The overcurrent protection unit 25 includes a differential amplifier circuit 80 and a semiconductor element 100. In this example, the semiconductor element 100 is an n-p-n transistor. The semiconductor element 100 is a normally-off type element. The semiconductor element 100 may be a p-n-p transistor or a FET. The semiconductor element 100 may be of a normally-on type.

The differential amplifier circuit 80 includes an operational amplifier 81, a resistor 82, and a capacitor 83, for example. The resistor 82 is connected between an output terminal of the operational amplifier 81 and an inverted input terminal of the operational amplifier 81. The capacitor 83 is connected to the resistor 82 in parallel with each other. That is, the differential amplifier circuit 80 includes negative feedback.

A non-inverted input terminal of the operational amplifier 81 is connected to one end of the resistor 84. The other end of the resistor 84 is connected to one end of the resistor 85, one end of the resistor 86, and one end of the capacitor 87. The other end of the capacitor 87 is connected to the low potential terminal 30d of the rectification circuit 30. The other end of the resistor 85 is connected to the output terminal 7. The other end of the resistor 86 is connected to the output terminal 8 and one end of the resistor 88. The other end of the resistor 88 is connected to the low potential terminal 30d of the rectification circuit 30.

Accordingly, the DC voltage obtained by dividing the second DC voltage VDC2 to be applied between the output terminals 7 and 8 by the resistors 85 and 86 is input to the non-inverted input terminal of the operational amplifier 81, as the detection voltage. That is, the non-inverted input terminal of the operational amplifier 81 is connected to the end portion of the illuminating load 12 on the low potential side. Accordingly, the current which flows to the illuminating light source 16 can be detected. When the light emitting element such as an LED is used for the illuminating light source 16, the voltage of the illuminating light source 16 is substantially constant according to the forward drop voltage. Accordingly, when the light emitting element such as an LED is used for the illuminating light source 16, it is possible to appropriately detect the current which flows to the illuminating light source 16 by connecting to the end portion of the illuminating load 12 on the low potential side.

The inverted input terminal of the operational amplifier 81 is connected to one end of the resistor 90. The other end of the resistor 90 is connected to one end of the resistor 91 and one end of the capacitor 92. The other end of the capacitor 92 is connected to the low potential terminal 30d of the rectification circuit 30. The other end of the resistor 91 is connected to the control unit 22. As described above, the inverted input terminal of the operational amplifier 81 is connected to the control unit 22 through the resistors 90 and 91. The dimming signal DMS from the control unit 22 is input to the inverted input terminal of the operational amplifier 81.

For example, the DC voltage obtained by smoothing the PWM signal by the capacitor 92 is input to the inverted input terminal of the operational amplifier 81 as the dimming signal DMS. For example, as the conduction section of the conduction angle control of the AC voltage VCT becomes longer, the voltage value of the dimming signal DMS becomes higher. The DC voltage according to the dimming level of the dimmer 3 is, for example, input to the inverted input terminal of the operational amplifier 81 as the dimming signal DMS. The voltage level of the dimming signal DMS is set according to the voltage level of the detection voltage input to the non-inverted input terminal. In detail, for example, the voltage level of the dimming signal DMS according to the desired dimming level is set so as to be substantially the same as the voltage level of the detection voltage in a case where the illuminating light source 16 emits light with brightness corresponding to the dimming level thereof.

As described above, the detection voltage corresponding to the current which flows to the illuminating light source 16 is input to the non-inverted input terminal of the operational amplifier 81, and the dimming signal DMS is input to the inverted input terminal of the operational amplifier 81. Accordingly, a signal corresponding to a difference of the detection voltage and the dimming signal DMS is output from the output terminal of the operational amplifier 81. As the detection voltage becomes larger than the dimming signal DMS, the output amount of the operational amplifier 81 becomes greater. That is, when the overcurrent flows to the illuminating light source 16, the output amount of the operational amplifier 81 becomes great. As described above, in this example, the dimming signal DMS is used as a reference value. In addition, when the dimming is not performed, the substantially constant DC voltage which is the reference value may be input to the inverted input terminal of the operational amplifier 81.

A collector of the semiconductor element 100 is connected to one end of the partial pressure resistor 47. The collector of the semiconductor element 100 is electrically connected to the gate of the constant current element 41 through the partial pressure resistor 47. An emitter of the semiconductor element 100 is connected to one end of a resistor 101. The other end of the resistor 101 is connected to the low potential terminal 30d of the rectification circuit 30. Accordingly, the emitter of the semiconductor element 100 is set to have lower potential than the potential of the source of the constant current element 41. A base of the semiconductor element 100 is connected to the output terminal of the operational amplifier 81. Accordingly, the current which flows between the emitter and the collector of the semiconductor element 100 is controlled by the output amount from the operational amplifier 81. That is, in this example, the collector of the semiconductor element 100 is a fourth electrode, the emitter of the semiconductor element 100 is a fifth electrode, and the base of the semiconductor element 100 is a sixth electrode.

The semiconductor element 100 includes a third state where current flows between the collector and the emitter and a fourth state where current which flows between the collector and the emitter is smaller than that of the third state. The third state is for example, an on state, and the fourth state is for example, an off state. The third state is not limited to the on state. The fourth state is not limited to the off state. The third state may be an arbitrary state where the flowing current is relatively larger than that of the fourth state. The fourth state may be an arbitrary state where the flowing current is relatively smaller than that of the third state.

In this example, the semiconductor element 100 is of a normally-off type, and changes the state from the fourth state to the third state by setting the potential of the base higher than the potential of the emitter. For example, by setting the potential of the base higher than the potential of the emitter, the semiconductor element 100 changes the state from the off state to the on state.

As described above, when the detection voltage is greater than the dimming signal DMS, the output amount of the operational amplifier 81 becomes greater. Accordingly, for example, when the detection voltage is greater than the dimming signal DMS, the semiconductor element 100 is in the on state, and when the detection voltage is equal to or lower than the dimming signal DMS, the semiconductor element 100 is in the off state. For example, as the detection voltage is greater than the dimming signal DMS, the current between the emitter and the collector of the semiconductor element 100 becomes greater.

In addition, the collector of the semiconductor element 100 is further connected to one end of a resistor 102 and one end of a capacitor 103. The other end of the resistor 102 is connected to the base of the semiconductor element 100. The other end of the capacitor 103 is connected to the low potential terminal 30d of the rectification circuit 30. The base of the semiconductor element 100 is further connected to one end of a resistor 104. The other end of the resistor 104 is connected to the low potential terminal 30d of the rectification circuit 30. As described above, reference voltage of the overcurrent protection unit 25 is set to potential of the low potential terminal 30d of the rectification circuit 30. That is, the reference potential of the overcurrent protection unit 25 is common with the reference potential of the DC-DC converter 21. The reference potential of the overcurrent protection unit 25 is substantially the same as the reference potential of the DC-DC converter 21.

Next, the operation of the power supply circuit 14 will be described.

First, a case where the dimming level of the dimmer 3 is set to approximately 100% and the power supply voltage VIN to be input is transmitted just as it is, that is, a case where the highest first DC voltage VDC1 is input to the DC-DC converter 21 will be described.

When the power supply voltage VIN is supplied to the power supply circuit 14, since the output element 40 and the constant current element 41 are the normally-on type elements, all of them are turned on. Then, the current flows through the flow paths of the output element 40, the constant current element 41, the inductor 43, and the output capacitor 48, and the output capacitor 48 is charged. The voltage of both ends of the output capacitor 48, that is, the voltage between the output terminals 7 and 8 is supplied to the illuminating light source 16 of the illuminating load 12 as the second DC voltage VDC2. In addition, since the output element 40 and the constant current element 41 are turned on, the inverse voltage is applied to the rectification element 42. The current does not flow to the rectification element 42.

When the second DC voltage VDC2 reaches the predetermined voltage level, the current flows to the illuminating light source 16 and the illuminating light source 16 is lighted up. At that time, the current flows through the flow paths of the output element 40, the constant current element 41, the inductor 43, the output capacitor 48, and the illuminating light source 16. For example, when the illuminating light source 16 is an LED, the predetermined voltage is forward drop voltage of the LED and is determined according to the illuminating light source 16. In addition, when the light of the illuminating light source 16 is turned off, since the current does not flow, the output capacitor 48 holds the value of the output voltage.

The first DC voltage VDC1 input to the DC-DC converter 21 is sufficiently higher than the second DC voltage VDC2. That is, a potential difference ΔV between input and output amounts is sufficiently great. Accordingly, the current which flows through the inductor 43 increases. Since the feedback winding 44 is subject to magnetic coupling with the inductor 43, a polar electromotive force for setting the coupling capacitor 45 side to a high potential is induced to the feedback winding 44. Therefore, positive potential with respect to the source is supplied to the gate of the output element 40 through the coupling capacitor 45, and the output element 40 maintains the on state.

When the current which flows through the constant current element 41 exceeds an upper limit value, the voltage between the drain and the source of the constant current element 41 is rapidly increased. Accordingly, the voltage between the gate and the source of the output element 40 becomes lower than threshold voltage, and the output element 40 is turned off. The upper limit value is a saturated current value of the constant current element 41, and is defined depending on the potential input to the gate of the constant current element 41. The gate potential of the constant current element 41 is set by the DC voltage supplied to the partial pressure resistors 46 and 47 through the bias resistor 49, the voltage of the illuminating light source 16, the partial pressure ratio of the partial pressure resistors 46 and 47, and the current between the emitter and the collector of the semiconductor element 100. In addition, as described above, since the gate potential of the constant current element 41 is negative potential with respect to the source, the saturated current value can be limited to an appropriate value.

The inductor 43 continuously makes the current flows in the flow paths of the rectification element 42, the output capacitor 48, and the illuminating load 12. At that time, since the inductor 43 emits energy, the current of the inductor 43 decreases. Accordingly, a polar electromotive force for setting the coupling capacitor 45 side to a low potential is induced to the feedback winding 44. The negative potential with respect to the source is supplied to the gate of the output element 40 through the coupling capacitor 45, and the output element 40 maintains the off state.

When the energy stored in the inductor 43 becomes zero, the current which flows through the inductor 43 becomes zero. The direction of the electromotive force induced to the feedback winding 44 is inverted again and the electromotive force for setting the coupling capacitor 45 side to the high potential is induced. Accordingly, the potential higher than that of the source is supplied to the gate of the output element 40 and the output element 40 is turned on again. Therefore, the state returns to the state where the voltage reached the predetermined voltage level described above.

Subsequently, the operation described above is repeated. Accordingly, the switching on and off of the output element 40 is automatically repeated, and the second DC voltage VDC2 obtained by decreasing the power supply voltage VIN is supplied to the illuminating light source 16. That is, in the power supply circuit 14, a switching frequency of the output element 40 is set by the partial pressure resistors 46 and 47 and the overcurrent protection unit 25. In addition, the current supplied to the illuminating light source 16 is set to the limited constant current of the upper limit value by the constant current element 41. Accordingly, it is possible to stably light up the illuminating light source 16.

The differential amplifier circuit 80 of the overcurrent protection unit 25 changes the base potential of the semiconductor element 100 according to a difference between the detection voltage corresponding to the current which flows through the illuminating light source 16 and the dimming signal DMS. For example, when the overcurrent flows through the illuminating light source 16 and the voltage level of the detection voltage is equal to or higher than the predetermined value, with respect to the voltage level of the dimming signal DMS, the differential amplifier circuit 80 sets high potential to the base of the semiconductor element 100 and substantially set the semiconductor element 100 in the on state.

When the semiconductor element 100 is in the on state, the gate potential of the constant current element 41 is set to the low potential terminal 30d of the rectification circuit 30, for example. That is, the negative potential is set to the gate potential of the constant current element 41, and the constant current element 41 is in the off state. Accordingly, the current which flows through the illuminating light source 16 becomes small and the overcurrent which flows through the illuminating light source 16 is suppressed. As described above, in this example, the overcurrent protection unit 25 performs the feedback control of the DC-DC converter 21 based on the detection voltage and the dimming signal DMS.

A case where the dimming level of the dimmer 3 is set to a value smaller than 100% and the AC voltage VCT input is transmitted with the conduction angle control, that is, a case where the high first DC voltage VDC1 is input to the DC-DC converter 21 is also in the same manner as described above, when the output element 40 can continue oscillation. The value of the first DC voltage VDC1 input to the DC-DC converter 21 changes according to the dimming level of the dimmer 3, and an average value of the output current can be controlled. Accordingly, it is possible to modulate the light of the illuminating light source 16 of the illuminating load 12 according to the dimming level.

In addition, when the dimming level of the dimmer 3 is set to the further smaller value, that is, when the first DC voltage VDC1 input to the DC-DC converter 21 is even much lower, since the potential difference of the both ends of the inductor 43 is small even when the output element 40 is switched on, the current which flows through the inductor 43 is difficult to be increased. Thus, the output element 40 is not turned to be in the off state and outputs the constant DC current. That is, when the dimming level of the dimmer 3 is small, that is, when the potential difference ΔV between the input and output amounts is small, the power supply circuit 14 performs an operation such as a series regulator.

As described above, when the potential difference ΔV is larger than the predetermined value, the power supply circuit 14 performs the switching operation and when the potential difference ΔV is smaller than the predetermined value, the power supply circuit performs the operation as a series regulator. When the potential difference ΔV is large, the product of the potential difference ΔV and the current is large and the loss becomes great when the operation of the series regulator is performed. Accordingly, when the potential difference ΔV is large, it is suitable to perform the switching operation for reducing power consumption. In addition, when the potential difference ΔV is small, since the loss is small, there is no problem to perform the operation as a series regulator.

In the power supply circuit 14, when the potential difference ΔV is smaller than the predetermined value, the current is vibrated as the output element 40 is not turned to be in the off state but continued to be in the on state, to light up the illuminating light source 16 of the illuminating load 12 with the average value of the current. In addition, when the potential difference ΔV is an even much smaller value, the output element 40 outputs the DC current to the illuminating load 12 to light up the illuminating light source 16 as being continued to be in the on state. As a result, in the power supply circuit 14, it is possible to continuously change the output current to zero. For example, in the illuminating device 10, the illuminating light source 16 of the illuminating load 12 can be smoothly turned off.

In the power supply circuit 14, the output current can be continuously changed from the maximum value at the time of the switching operation of the output element 40 to the minimum value at the time of outputting the DC current while continuing the on state of the output element 40, according to the potential difference ΔV. For example, in the illuminating device 10, it is possible to continuously modulate the light of the illuminating light source 16 in a range of 0% to 100%.

In the power supply circuit 14, the overcurrent protection unit 25 is connected to the end portion of the illuminating load 12 on the low potential side, the current which flows through the illuminating light source 16 is detected, and the operation of the DC-DC converter 21 is subject to the feedback control according to the detection results. Even when the input voltage such as the power supply voltage VIN or the AC voltage VCT is deformed, the voltage of the illuminating light source 16 is stabilized to some extent. Accordingly, as described above, by connecting the overcurrent protection unit 25 to the end portion of the illuminating load 12 on the low potential side to detect the current which flows through the illuminating light source 16, it is possible to improve the detection accuracy of the current, for example. When the overcurrent occurs, for example, it is possible to rapidly stop the current which flows through the illuminating light source 16. In addition, it is possible to easily set the negative potential with respect to the gate of the constant current element 41 which is of the normally-on type. Accordingly, in the power supply circuit 14, it is possible to perform more accurate current control and the overcurrent protection.

In addition, in the power supply circuit 14, the reference potential of the overcurrent protection unit 25 is common with the reference potential of the DC-DC converter 21. Accordingly, for example, it is possible to suppress fluctuation of the second DC voltage VDC2 which is the output voltage.

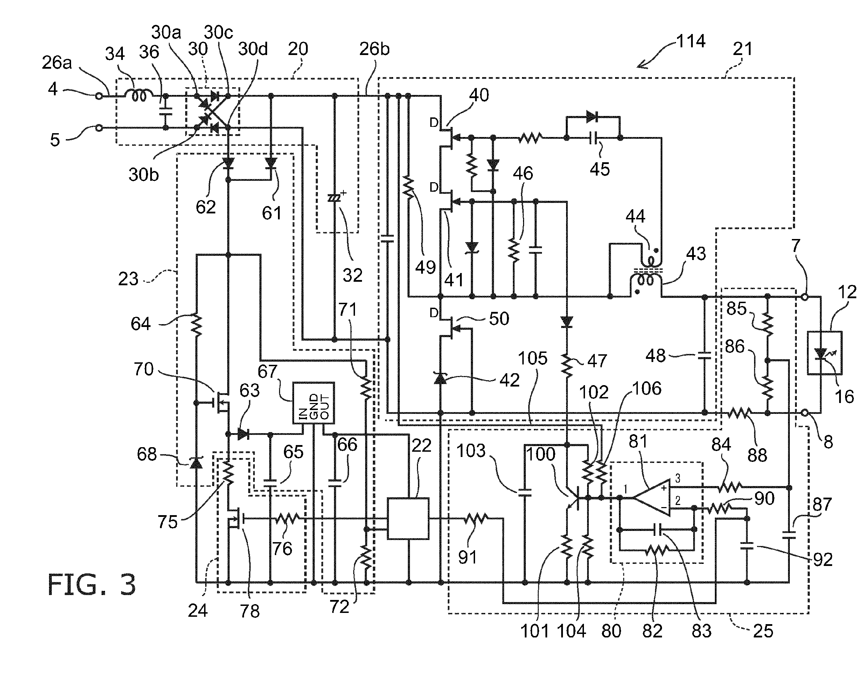

FIG. 3 is a circuit diagram schematically showing another power supply circuit according to the exemplary embodiment.

As shown in FIG. 3, in a power supply circuit 114 in this example, a voltage input flow path 105 is provided in the overcurrent protection unit 25. One end of the voltage input flow path 105 is connected to the second power supply flow path 26b. One end of the voltage input flow path 105 is connected to the end portion of the smoothing capacitor 32 on the high potential side, for example. The other end of the voltage input flow path 105 is connected to the base of the semiconductor element 100. As described above, the voltage input flow path 105 is electrically connected between the second power supply flow path 26b and the base of the semiconductor element 100.

In this example, the voltage input flow path 105 includes a resistor 106 (resistor element). For example, one end of the resistor 106 is connected to the second power supply flow path 26b, and the other end of the resistor 106 is connected to the base of the semiconductor element 100. Thus, the voltage input flow path 105 inputs DC voltage according to the first DC voltage VDC1 to the base of the semiconductor element 100. The DC voltage according to the first DC voltage VDC1 may be, for example, the first DC voltage VDC1 itself, or may be DC voltage obtained by dividing the first DC voltage VDC1.

In the power supply circuit 114, for example, at the time of starting the supply of the power supply voltage VIN (at the time of power activation), the voltage is applied to the base of the semiconductor element 100, before the differential amplifier circuit 80 is operated and before the illuminating light source 16 is lighted up. That is, in the power supply circuit 114, the semiconductor element 100 can be turned to be in the on state, before the differential amplifier circuit 80 is operated and before the illuminating light source 16 is lighted up. Accordingly, in the power supply circuit 114, at the time of starting the supply of the power supply voltage VIN, the constant current element 41 can be turned to be in the off state before the lighting up of the illuminating light source 16. The term "before the lighting up of the illuminating light source 16" means before the forward drop voltage is applied to the illuminating light source 16, for example. For example, it is before the predetermined voltage is accumulated in the output capacitor 48.

That is, in the power supply circuit 114, at the time of starting the supply of the first DC voltage VDC1 to the DC-DC converter 21, the semiconductor element 100 is set to be in the third state, before the voltage supplied to the illuminating load 12 reaches the predetermined value (for example, forward drop voltage) lower than the second DC voltage VDC2.

A resistance value of the resistor 106 is, for example, lower than a resistance value of internal resistance of the illuminating light source 16 in the state that is equal to or less than the forward drop voltage. Accordingly, the semiconductor element 100 can be turned to be in the on state before the lighting up of the illuminating light source 16.

For example, in the power supply circuit 14 described above, since the output element 40 and the constant current element 41 are of the normally-on type, at the time of starting the supply of the power supply voltage VIN, the voltage may be applied to the illuminating light source 16, before the activation of the overcurrent protection unit 25. In this case, the high voltage is applied to the illuminating light source 16 and the illuminating light source 16 is temporarily lighted up with unintended high brightness.

With respect to this, in the power supply circuit 114, the semiconductor element 100 is turned to be in the on state before the lighting up of the illuminating light source 16, and the constant current element 41 is turned to be in the off state. Accordingly, it is possible to suppress the application of the voltage to the illuminating light source 16, before the activation of the overcurrent protection unit 25. For example, at the time of starting the supply of the power supply voltage VIN (at the time of starting the supply of the first DC voltage VDC1), it is possible to suppress the temporary lighting up of the illuminating light source 16 with unintended high brightness.

In this example, the voltage input flow path 105 using the resistor 106 is shown, however, the voltage input flow path 105 is not limited thereto. The voltage input flow path 105 may be an arbitrary circuit which can switch the semiconductor element 100 to the on state at the time of starting the supply of the power supply voltage VIN.

For example, the semiconductor element 100 may be the normally-on type element such as the pnp transistor. In this case, the semiconductor element 100 can be turned to be in the on state at the time of starting the supply of the power supply voltage VIN, without providing the resistor 106 and the like.

Hereinabove, the exemplary embodiments are described with reference to the detailed examples, however, the exemplary embodiments are not limited thereto and various modifications can be performed.

For example, the output element 40 and the constant current element 41 are not limited to the GaN type HEMTs. For example, the output element 40 and the constant current element 41 may be semiconductor elements which are formed using a semiconductor (wide bandgap semiconductor) including a wide bandgap such as silicon carbide (SiC), gallium nitride (GaN), or diamond on a semiconductor substrate. Herein, the wide bandgap semiconductor means a semiconductor having a bandgap wider than gallium arsenide (GaAs) having a bandgap of approximately 1.4 eV. For example, a semiconductor having a bandgap of equal to or more than 1.5 eV, such as gallium phosphide (GaP, a bandgap of approximately 2.3 eV), gallium nitride (GaN, a bandgap of approximately 3.4 eV), diamond (C, a bandgap of approximately 5.27 eV), aluminum nitride (AIN, a bandgap of approximately 5.9 eV), silicon carbide (SiC), or the like is included. When equalizing withstanding pressure, since parasitic capacitance is small and high-speed operation can be performed as it is possible to make the withstanding pressure smaller than that of the silicon semiconductor element, in such a wide bandgap semiconductor element, the switching cycle can be shortened and the miniaturization of winding components or capacitors can be realized.

In the exemplary embodiment, cascode connection of the output element 40 and the constant current element 41 is performed, the switching is performed in the output element 40, and the control of the current is performed in the constant current element 41. There is no limitation to this, and for example, the switching and the control of the current may be performed only in the constant current element 41.

In addition, the illuminating light source 16 is not limited to the LED, and for example, may be an organic electro-luminescence (EL) or an organic light-emitting diode (OLED). The plurality of illuminating light sources 16 may be connected to the illuminating load 12 in series or in parallel with each other.

In the exemplary embodiments, the illuminating load 12 is shown as the DC load, however, it is not limited thereto, and for example, the other DC load, such as a heater may be used. In the exemplary embodiments, the power supply circuit 14 used for the illuminating device 10 is shown as the power supply circuit, however, it is not limited thereto, and an arbitrary power supply circuit corresponding to the DC load may be used.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A power supply circuit (14, 114) comprising:
a DC-DC converter (21) which converts a first DC voltage supplied from a power supply flow path (26b) into a second DC voltage having a different absolute value, to supply the voltage to a DC load (12); and
an overcurrent protection unit (25) which is electrically connected to an end portion of the DC load (12) on a low potential side, and performs feedback control of the DC-DC converter (21) based on current which flows to the DC load (12),
the DC-DC converter (21) including a normally-on type switching element (41),
the switching element (41) including a first electrode which is electrically connected to the power supply flow path (26b), a second electrode which is electrically connected to the DC load (12), and a third electrode for controlling current which flows between the first electrode and the second electrode,
the switching element changing a state from a first state into a second state by setting a potential of the third electrode lower than a potential of the second electrode, the first state being a state where a current flows between the first electrode and the second electrode, and the second state being a state where a current which flows between the first electrode and the second electrode is smaller than that of the first state, and
the overcurrent protection unit (25) being electrically connected to the third electrode, and when the current which flows to the DC load (12) is greater than a reference value, the overcurrent protection unit changing the state of the switching element (41) from the first state to the second state by decreasing the potential of the third electrode.

2. The circuit (14, 114) according to claim 1, wherein
the overcurrent protection unit (25) includes a semiconductor element (100),
the semiconductor element (100) includes:
a fourth electrode which is electrically connected to the third electrode,
a fifth electrode which is set to a potential lower than potential of the second electrode, and
a sixth electrode for controlling current which flows between the fourth electrode and the fifth electrode,
the semiconductor element is configured to have a third state and a fourth state, the third state being a state where current flows between the fourth electrode and the fifth electrode, and the fourth state being a state where the current which flows between the fourth electrode and the fifth electrode is smaller than that of the third state,
the overcurrent protection unit (25) sets the switching element (41) in the first state by setting the semiconductor element (100) in the fourth state, and sets the switching element (41) in the second state by setting the semiconductor element (100) in the third state, and
at a time of starting the supply of the first DC voltage to the DC-DC converter (21), the semiconductor element (100) is set in the third state, before the voltage to be supplied to the DC load (12) reaches a predetermined value which is lower than the second DC voltage.

3. The circuit (114) according to claim 2, wherein
the semiconductor element (100) is of a normally-off type which changes the state from the fourth state to the third state by setting the potential of the sixth electrode higher than the potential of the fifth electrode, and
the overcurrent protection unit (25) is electrically connected between the power supply flow path (26b) and the sixth electrode, and includes a voltage input flow path (105) which inputs DC voltage according to the first DC voltage to the sixth electrode.

4. The circuit (14, 114) according to any one of claims 1 to 3, wherein the DC load (12) is an illuminating load (12) containing a light emitting element having forward drop voltage.

5. An illuminating device (10) comprising:
an illuminating load (12); and
the power supply circuit (14) according to any one of claims 1 to 4 which supplies power to the illuminating load (12).
